Europäisches Patentamt

European Patent Office

Office européen des brevets

(19)

(11) Publication number: **0 014 537**
**B1**

(12) **EUROPEAN PATENT SPECIFICATION**

(45) Date of publication of patent specification: **19.01.83**

(51) Int. Cl.³: **B 60 Q 1/38, B 60 Q 11/00**

(21) Application number: **80300214.6**

(22) Date of filing: **23.01.80**

(54) Direction indicating apparatus for vehicles.

(30) Priority: **13.02.79 JP 15861/79**

(43) Date of publication of application:
**20.08.80 Bulletin 80/17**

(45) Publication of the grant of the patent:
**19.01.83 Bulletin 83/3**

(84) Designated Contracting States:
**DE FR GB**

(56) References cited:
**EP - A - 0 002 359**
**DE - A - 2 448 410**
**FR - A - 2 327 118**
**FR - A - 2 339 980**
**GB - A - 1 427 041**
**US - A - 4 150 359**

(73) Proprietor: **NIPPONDENSO CO., LTD.**
**1, 1-chome Showa-cho**
**Kariya-shi Aichi-ken (JP)**

(72) Inventor: **Ariyoshi, Hiromi**
**7-12, Tenno-cho**
**Kariya-shi, Aichi-ken (JP)**
Inventor: **Mizuno, Tiaki**
**144-1236, Kamiike-2-chome**
**Toyota-shi, Aichi-ken (JP)**

(74) Representative: **Hartley, David et al,**
**c/o Withers & Rogers 4 Dyer's Buildings Holborn**
**London, EC1N 2AJT (GB)**

Courier Press, Leamington Spa, England

Direction indicating apparatus for vehicles

The present invention relates to direction indicating apparatus for vehicles and in particular apparatus which is capable of protecting a load circuit in the event of a short-circuit.

Conventional direction indicating apparatus are usually of the kind comprising two lamp groups one of which is connectable to a battery through switch means by the closure of a direction indicating switch connected in series with the battery and the switch means, signal generating means responsive to the direction indicating switch and effective to generate a train of flashing signals periodically during the closure of the direction indicating switch to the said one of the said two lamp groups; and actuating means responsive to the flashing signals and effective to render the switch means conductive and non-conductive periodically in response to the flashing signals. Generally, the apparatus includes an indicator for warning the operator in the event that one or more of the indicator lamps become disconnected. No indication is provided, however, in the case of a short-circuit in a load circuit so that the operator remains ignorant of the fault, the apparatus apparently continuing to operate normally. If, in such circumstances, the operator continues driving the vehicle, an unduly high electric current flows through the load circuit during operation of the direction indicating apparatus causing overheating and burnout of the current detecting resistor and various connectors or excessive battery discharge.

Systems designed to protect direction indicating apparatus against this eventuality have been proposed and one example is described in French Patent Specification No. 2 327 118.

According to the present invention we propose direction indicating apparatus of the kind referred to and which is characterised by current detecting means connected in series with the switch means and effective to produce there-across a current detection signal proportional to the magnitude of the electric current; discriminating means responsive to the current detection signal and a reference signal having a predetermined magnitude and effective to produce a discrimination signal indicating that the current detection signal is in excess of the reference signal; and preventing means responsive to the flashing signals and the discrimination signal and effective to prevent the actuating means from actuating said switch means in response to the said flashing signals during an interval of time longer than the period of each of the flashing signals when the discrimination signal is produced after a certain interval of time has passed following the onset of each of flashing signal.

Apparatus of this invention is capable, when a short-circuit occurs in a load circuit including direction indicating lamps; of preventing an excessive electric current from flowing through the load circuit and of warning a vehicle operator of the short-circuit.

The apparatus operates by generating both a flashing signal for energizing direction indicating lamps and a detection signal indicative of the electric load current flowing through the load circuit including the lamps, so that the load current flowing through the load circuit is monitored when the load current is kept stable after the lamps are energized. If a short-circuit in the load circuit is detected from the magnitude of the load current the flashing circuit is inhibited during at least a predetermined interval of time after the short-circuit is detected.

A preferred embodiment of this invention will now be described by way of example with reference to the accompanying drawings of which:

Figure 1 is a block diagram of direction indicating apparatus according to this invention.

Figure 2 is an electric circuit diagram of the apparatus shown in Fig. 1.

Figure 3 is a graph of detection voltage against battery voltage; Figures 4 and 5 are waveform diagrams illustrating the operation of the apparatus of Figures 1 and 2; and Figures 6 and 7 are circuit diagrams each showing a respectively modification to a short-circuit discrimination circuit forming part of the apparatus of Figures 1 and 2.

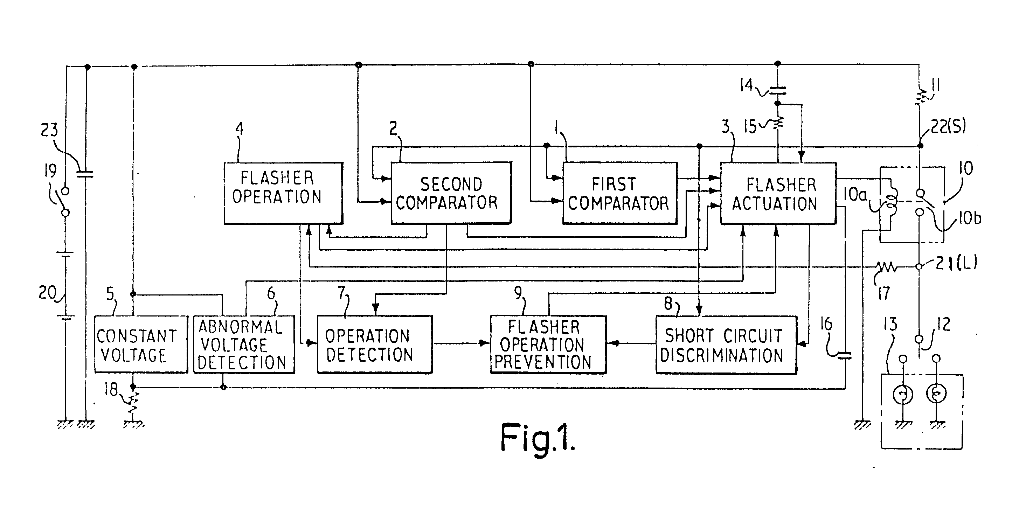

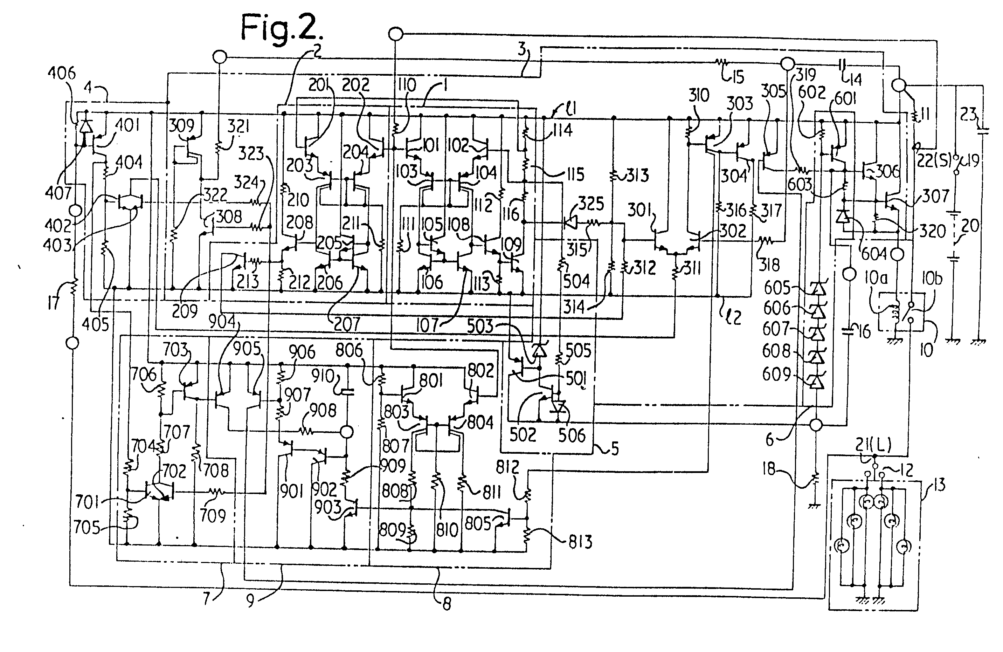

The direction indicating apparatus shown in Figures 1 and 2 has a series circuit comprising a vehicle storage battery 20, a battery switch 19, a current detecting resistor 11 having a small resistance, a relay 10, a direction indicating switch 12 and direction indicating lamps 13, and functions to energize one of the lamps 13 by periodically energizing the relay 10 by a semiconductor integrated circuit (blocks 1—9) when the battery switch 19 and the direction indicating switch 12 are closed. First and second comparators 1 and 2 are connected to receive a voltage developed across a resistor 11 (e.g. 0.01—0.1 ohm) which detects a total electric current flowing through the lamps 13. The first comparator 1 detects the presence or absence of a disconnection in the lamps circuit and applies a detection signal to an actuating circuit 3 upon disconnection of the lamps 13 so that the flashing period and duty ratio are changed. The second comparator 2 detects the open and closed conditions of the switch 12 and a relay switch 10b and applies a detection signal to a control circuit 4 and the actuating circuit 3. The actuating circuit 3 includes an oscillating circuit and a relay actuation circuit. The oscillation circuit has a charge-discharge capacitor 14 and a resistor 15 both of which are connected outside the integrated circuit. The oscillating circuit is switched on and off in response to the output of the flasher operation control circuit 4 and the charge-discharge operation is controlled by the output of the second comparator 2. The threshold value of the oscillation circuit is changed by the output of the first comparator 1 upon disconnection of the lamps 13 so that the flashing conditions of the lamps 13, the flashing frequency and duty ratio, are changed. On the other hand the relay actuation circuit is controlled by the oscillation circuit to actuate the relay 10.

The control circuit 4 receives the outputs from the second comparator 2 and an L-terminal 21 and inhibits operation of the actuating circuit 3 when the switch 12 or the relay switch 10b is open and the L-terminal 21 is at the battery voltage. A constant voltage circuit 5 regulates the voltages supplied to the blocks 1, 2, 3, 4, 7, 8 and 9 of the semiconductor integrated circuit. A detection circuit 6 detects an abnormal voltage appearing on a supply bus and controls the actuating circuit 3 so that the relay 10 is forcibly energized and prevents application of an abnormal voltage to the semiconductor integrated circuit.

An operation detection circuit 7, a short-circuit discrimination circuit 8 and an inhibiting circuit 9 constitute a short-circuit protection circuit. The short-circuit protection circuit detects the presence and absence of a short-circuit in the load circuit including the lamps and, when a short-circuit exists, inhibits the flasher actuation circuit 3 or increases the flashing interval sufficiently to decrease the electric current flowing through the load circuit to substantially zero. The operation detection circuit 7 receives the signals from the second comparator 2 and the control circuit 4 and, when the L-terminal 21 is at a high level or open and the relay switch 10b is open, that is, when the switch 12 is open, produces a detection signal. The short-circuit discrimination circuit 8 receives a voltage developed at an S-terminal 22 and a flashing signal indicative of the lamp flashing from the actuation circuit 3 and, when the flashing signal is absent and electric current is flowing through the load circuit, that is, when the relay 10 is subjected to a response delay, discriminates the magnitude of the load current flowing through the load circuit. If the load current is in excess of a predetermined value, a discrimination signal indicative of the short-circuit in the load circuit is produced. The inhibiting circuit 9 receives the discrimination signal from the short-circuit discrimination circuit 8 and produces a signal which inhibits the flasher actuation circuit 3 and the relay 10 for a predetermined interval of time.

The capacitor 16 connected outside the integrated circuit provides a slope on the output of the flasher actuation circuit 3 to prevent a relay coil 10a from generating a counter electromotive force. The resistors 17 and 18 also external to the integrated circuit limit the currents flowing into the integrated circuit thereby protecting the semiconductor elements against an abnormally high voltage appearing on the supply bus. The capacitor 23 connected outside the integrated circuit absorbs ignition pulses to protect the circuits.

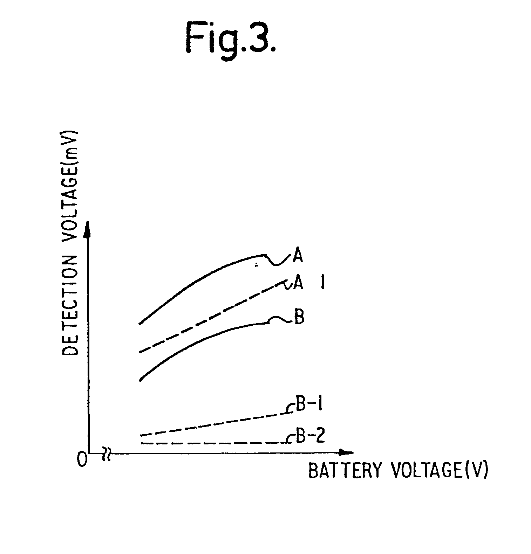

Referring to Fig. 3, this graph shows the relationship between the voltage developed across the detecting resistor 11 and the voltage across the battery 20 both when a discontinuity exists in the lamps 13 and in the absence of a discontinuity. The curve A indicates the developed voltage where none of the front, rear, side and interior lamps are disconnected (the lamps are in the normal condition), while a curve B indicates the voltage where one of the front or rear lamps is disconnected (the lamp is disconnected). In a typical vehicle, each of the front and rear lamps is rated at 23 watts, a side lamp is rated at 8 watts and the interior lamp is rated at 3 watts of electric power. The parallel resistance of the lamps is 3 ohms.

Referring to Fig. 2, the first comparator 1 comprises transistors 101—109 and resistors 110—116 and receives the signal developed at the junction 22, S-terminal, between the resistor 11 and the relay switch 10b to compare it with the reference threshold value determined by the resistors 114—116, 504 and 505 so that a disconnection in the lamps 13 is detected. This threshold value lies between the curves A and B as shown by a characteristic curve A-1 in Fig. 3. The second comparator 2 comprises transistors 201—209, resistors 114—116, 504 and 505 used in the first comparator 1 and receives the signal developed at the S-terminal 22 for comparison with the reference threshold value determined by the resistors 114—116, 504 and 505 so that the open and closed conditions of the switch 12 are detected. This threshold value is almost zero as shown by a curve B-1 in Fig. 3. The curve B-1 may be replaced by a curve B-2.

The flasher actuation circuit 3 includes the oscillating circuit and the relay actuation circuit. The oscillating circuit includes the charge-discharge circuit comprising the resistor 15 and the capacitor 14, a comparator comprising transistors 301—305 and resistors 310—311 and 316—319 for detecting the voltage across the capacitor 14, a charging current control circuit comprising transistors 308 and 309 and resistors 321—323 for controlling the charging current in response to the output of the comparator 2, a reference voltage circuit comprising resistors 312—314 for providing the comparator with a reference voltage, and a resistor 315 and a diode 325 combination operative to adjusting the reference voltage circuit in response to the output of the first comparator 1, so as to change the oscillation period and duty ratio of the oscillation circuit. This relay actuation circuit comprises transistors 306 and 307 and a resistor 320 and is controlled by the output transistor 305 of the oscillation circuit.

Instead of a diode, generally used for absorbing the opposing electromotive force, the capacitor 16 and the resistor 18 are connected to the base of the transistor 306 to prevent the generation by the relay coil 10a of an opposing electromotive force. As a result, the output of the transistor 305 has a gradient, the time constant being determined by the capacitor 16 and the resistors 18 and 603 so that the transistors 306 and 307 are rendered ON gradually. The diode 604 conducts when a negative surge voltage appears on the supply line 11 to reversely render the output transistor 307 ON so that the transistor 307 is protected by dividing the surge voltage between the transistor 307 and the resistance of the relay coil 10a. The base current of transistor 309 is controlled by the resistor 322 and this transistor limits the charging current flowing upon conduction of the transistor 308 and the current flowing into the charge-discharge circuit.

The flashing control circuit 4 comprises a diode 407, transistors 401—403 and resistors 404—406. The transistors 402 and 403 are connected so that both transistors 402 and 403 are OFF when the L-terminal 21 is high and the transistor 208 of the second comparator 208 is OFF to produce an output which is low, that is, when the switch 12 is open. On the other hand, the transistors 402 and 403 are connected so that either one of the transistors 402 and 403 is ON without fail when the switch is closed. The constant voltage circuit 5 comprises resistors 504 and 505, a diode 506, transistors 501 and 502 and a zener diode 503 to regulate the voltage between the supply buses $1_1$ and $1_2$. The resistor 17 is connected to apply the voltage developed at the L-terminal 21 to the flashing control circuit 4. The abnormal voltage detection circuit 6 comprises resistors 602 and 603, a transistor 601, a diode 604 and a plurality of serially connected zener diodes 605—609. When an excessively high voltage appears on the supply bus $1_1$, the zener diodes 605—609 break down to regulate the voltage between the buses $1_1$ and $1_2$ at a predetermined zener voltage and hold the transistors 601 and 307 ON.

The operation detection circuit 7 comprises transistors 701—703 and resistors 704—709. The transistor 703 is connected to be OFF and ON when the switch 12 is open and closed respectively. The short-circuit discrimination circuit 8 comprises transistors 801—805 and resistors 806—813 to monitor the load current flowing after the nonconduction of the transistor 303 of the flasher actuation circuit 3. When the load current is in excess of a predetermined value, the transistors 801 and 803 are ON. The flashing inhibiting circuit 9 comprises transistors 901—905, resistors 906—909 and a capacitor 910. The capacitor 910, the resistors 906 and 907 and the transistors 901 and 902 constitute a timer circuit. A predetermined interval of time (e.g. more than 20 seconds) after the nonconduction of the transistor 903, the transistors 905 is switched ON to switch OFF the transistor 305, so that an inhibiting signal is produced.

The above described circuits are designed to be integrated into the semiconductor chip. However, the capacitors 14, 16 and 23, the relay coil 10a, the relay switch 10b and the resistors 11, 17, and 18 are external to the semiconductor chip for reasons of precision, power consumption and difficulty in integration.

In operation, first of all, the base voltage of the transistor 501 in the constant voltage circuit is maintained by the transistor 502 proportional to the voltage on the supply bus $1_1$. As a result, the emitter voltage of the transistor 501, the voltage on the supply bus $1_2$, is also proportional to the voltage across the battery 20 and thus the voltage between the supply buses $1_1$ and $1_2$ is kept constant (e.g. 5—7 volts).

It is assumed that the direction indicating switch 12 is open and the battery switch 19 is closed when none of the direction indicating lamps 13 is disconnected. Since in this condition the current detecting resistor 11 does not produce the detection voltage, the voltage of the battery 20 is applied to the second comparator 2 through the resistor 110 so that the transistors 202 and 204—207 are switched ON and the transistors 208 and 209 are switched OFF. Since the voltage at the L-terminal 21 is kept high, on the other hand, the transistor 401 is switched OFF to render the transistors 402 and 403 OFF in the flashing control circuit 4. As a result, the oscillation of the oscillator is not enabled in the flashing actuation circuit 3. Since the transistors 308 and 309 are switched OFF and ON respectively, the capacitor 14 neither charges nor discharges. The transistors 306 and 307 in the relay actuation circuit are switched OFF to keep the relay switch 10b open.

When the switch 12 is closed, the voltage at the L-terminal 21 goes low so that the transistors 401 and 402 are switched ON in the flashing control circuit 4 to enable the oscillator in the flashing actuation circuit 3. Since in this state the capacitor 14 stores no electric charge the voltage on the battery 20 is applied to the comparator through the capacitor 14 and the resistor 318. As a result, the transistors 302, 303 and 305 are switched ON and the transistors 306 and 307 are switched ON in the relay actuation circuit to energize the relay 10. Thus the lamps 13 start flashing. Since the resistor 11 then produces the voltage, the transistors 201, 203, 208 and 209 are switched ON in the second comparator 2 to switch ON the transistor 308. As a result, the capacitor 14 begins to charge. The charging path is from the battery 20 to the transistor 308 through the capacitor 14 and the resistors 15 and 321. Although the voltage at the L-terminal 21 goes high again to switch OFF the transistors 401 and 402, the oscillation in the flashing actuation circuit 3 is not stopped when the transistor 403 is ON. During charging, in which the resistor 11 produces the comparatively large voltage, the transistors 102, 104 and 109 are ON in the first comparator 1 to establish the reference voltage $V_{L1}$ by the resistors 312—315. When the charge voltage of the capacitor 14 decreases below the reference voltage $V_{L1}$, the transistor 301 is switched ON and the transistors 302, 303 and 305 are switched OFF so switching OFF the transistors 306 and 307. As a result, the relay switch 10b opens to stop the flashing of the lamps 13. Since the resistor 11 produces no voltage on this state, the voltage on the battery 20 is applied to the first and second comparators 1 and 2 through the resistor 110. The transistors 201, 203, 208 and 209 are switched OFF in the second comparator 2 to switch OFF the transistor 403 in the flashing control circuit 4. Since the voltage at the L-terminal 21 goes low, the transistors 401 and 402 are switched ON to maintain the oscillation of the oscillator.

When flashing of the lamps 13 ceases, the transistors 102, 104, 108 and 109 are switched OFF in the first comparator 1 and the transistor 209 is switched OFF in the second comparator 2. The reference voltage in the oscillator changes from $V_{L1}$ to $V_H$ determined by the resistors 313 and 314. Since the transistor 308 is OFF, the discharging current flows into the capacitor 14 through the transistor 309 and the resistors 321 and 15. When the discharge voltage of the capacitor 14 increases above the reference voltage $V_H$, the transistor 301 is switched OFF and the transistors 302, 303, 305, 306 and 307 are switched ON. As a result, the relay switch 10b closes to enable flashing of the lamps 13. The resistor 11 produces the voltage again to switch ON the transistors 102, 104, 108 and 109 in the first comparator 1 and the transistors 201, 203, 208 and 209 in the second comparator 2. Thus the above described flashing of the lamps 13 is repeated periodically.

Should one of the front and rear lamps 13 become disconnected, the reference voltage in the first comparator 1 is established in accordance with curve A-1 in Fig. 3 in view of the resistance characteristic of the lamps 13 and the resistance of the resistor 11. While the lamps 13 are flashing, that is, the capacitor 14 is charging, the transistors 102, 104, 108 and 109 are OFF so that the output goes high contrary to the case where none of the lamps 13 is disconnected. As a result, the reference voltage established in the oscillator of the flashing actuation circuit 3 is changed from $V_{L1}$ to $V_{L2}$ which is larger than $V_{L1}$ so that the difference between the reference voltage $V_H$ and $V_{L2}$ is decreased so decreasing the oscillation period and duty ratio. It should be noted that, since charging and discharging voltages of the capacitor 14 changes exponentially, the oscillation period and duty ratio are changed simultaneously by changing one of the reference voltages $V_H$ and $V_L$.

As described above, a memory device such as a flip-flop is not needed to detect closure of the switch 12 because flashing operation is maintained by the second comparator 2 and the flashing control circuit 4. Therefore, even when a negative pulse sufficient to decrease the voltage of the battery 20 to zero appears on the supply bus $1_1$, the direction indicating apparatus temporarily ceases to operate but restores the flashing operation thereafter. Thus erroneous flashing does not occur.

In the event of an abnormally high positive voltage appearing on the supply bus $1_1$, the current flows through the emitter-base path of the transistor 601, the zener diodes 605—609 and the current limiting resistor 18 to switch ON the transistor 601 so holding on the output transistors 306 and 307. Since the current is limited by the resistor 18, the integrated circuit is never supplied with a voltage which is in excess of the sum of the voltages between the base-emitter path of the transistor 601 and the zener diodes 605—609. By designing the transistor 307 and the relay 10 to be sufficiently durable to the large current, the relay coil 10a which receives a portion of the excessive voltage is effective to prevent break-down of the circuit element such as the transistor 307. The resistor 17 also limits the current in the same manner as the resistor 18. When an excessively high negative voltage appears, on the other hand, the resistors 17 and 18 limit current. The current flows through the relay coil 10a, the diode 604 and the collector-base path of the transistor 307 to switch the transistor 307 ON reversely so that the current is limited by the inherent resistance (some 10 ohms) of the relay coil 10a. It should be noted that there is parallel connected no diode to absorb the counter electromotive force of the relay coil 10a. This is because, if the diode is connected in parallel with the relay coil log, the electric current flows there through in response to the excessively high negative voltage and will cause break-down of the diode 604 or the transistor 307 within the integrated circuit. Instead of the diode, the inherent resistance of the relay coil 10a is effectively used to limit the current.

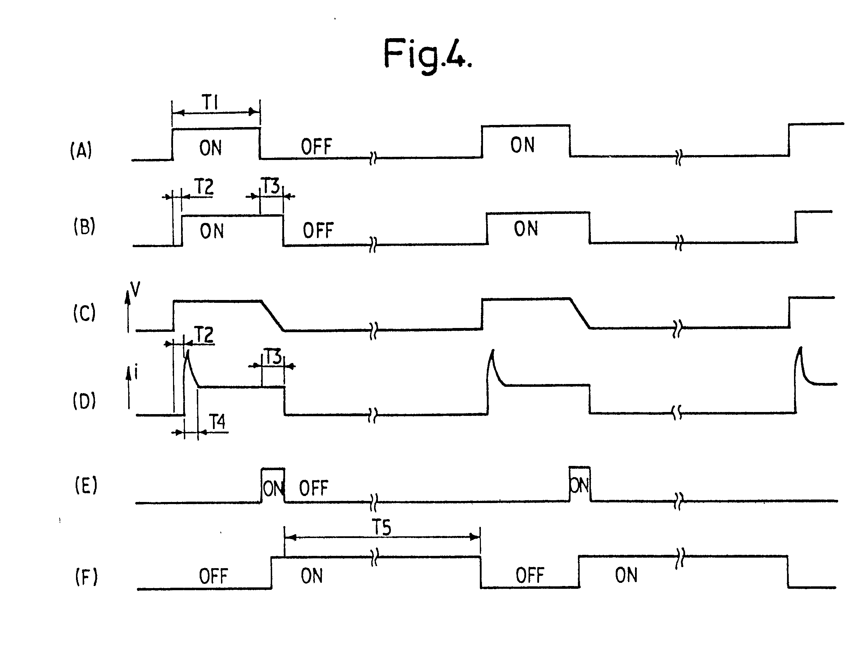

The circuits 7, 8, and 9 act in the following way to protect against a short-circuit. Since either one of the transistors 701 and 702 is switched ON without fail during the closure of the switch 12, the transistor 904 is continuously held OFF to prevent short-circuiting the capacitor 910. While the transistors 302 and 303 are ON in the flashing actuation circuit 3 produces the flashing signal (see (A) of Fig. 4), the transistor 805 is switched ON in the short-circuit discrimination circuit 8 to hold OFF the transistor 903. Soon after the transistors 302 and 303 are switched OFF because of the decrease in the charging voltage of the capacitor 14, the relay switch 10b is held closed (to allow the load current (see (D) of Fig. 4) to flow) because of a response delay $T_3$ of the relay switch 10b (see (B) of Fig. 4, e.g. $T_3 = 5—10$ milliseconds). The load current is generally about 4—5 amps when none of the lamps 13 is disconnected. Therefore, the voltage developed across the resistor 11 is small enough to switch ON the transistors 802 and 804 and to switch OFF the transistors 801 and 803. The transistor 903 is continuously held OFF to hold OFF the transistor 905. Thus, when none of the lamps 13 is disconnected, there is no protection. This also applies, when some of the lamps 13 are disconnected to decrease the load current.

When one of the lamps 13 is short-circuited, the load current (e.g. more than 10 amperes) which is larger than that when none of the lamps 13 is disconnected, continues to flow even after the flashing signal has disappeared because the transistors 303 and 805 are switched OFF. The voltage across the resistor 11 increases to exceed the reference voltage determined by the resistors 806 and 807 and the transistors 801 and 803 are switched ON to switch ON the transistor 903 during the response delay time $T_3$ of the relay 10 (see (E) of Fig. 4). The capacitor 910 charges through the resistor 909 during this interval of time $T_3$. Soon after charging begins, the transistors 901, 902 and 905 are switched ON to apply the battery voltage to the collector of the transistor 303 of the flashing actuation circuit 3 so that the transistor 303 is held OFF.

After the relay switch 10b opens, the transistors 801, 803, and 903 are switched OFF. However, since the electric charge stored on the capacitor 910 discharges through the resistors 906 and 907 and the transistors 901 and 902, the transistors 901, 902 and 905 are switched ON for a predetermined interval of time $T_5$ (e.g. 20—100 seconds, see (F) of Fig. 4) until discharging is complete. Thus, the transistor 303 is held OFF. As a result, the output transistor 307 of the flashing actuation circuit 3 is switched OFF during the interval $T_5$ irrespective of the output condition on the prededing circuit stage. Flashing of the lamps 13 ceases. Since the transistors 308 and 309 are held OFF and ON respectively, the capacitor 14 completes discharging.

After the predetermined interval $T_5$ the transistors 901, 902 and 905 are switched OFF and the transistors 302, 303, 305, 306 and 307 are switched ON to close the relay switch 10b. Since the transistors 801, 803, and 903 are switched ON soon after the transistor 303 has been switched OFF, the timer circuit including the capacitor 910 stops the flashing of the lamps 13 during the predetermined interval $T_5$.

By setting the interval $T_5$ in which the flashing prevention circuit 9 operates, to be comparatively long (by the circuit elements 901, 902, 906, 907, 909 and 910), the vehicle operator can recognize a malfunction by virtue of the fact that the lamps 13 do not flash in the usual manner. Owing to the comparatively long interval $T_5$, the flashing interval is lengthened sufficiently to decrease the total current flowing through the load circuit including the lamps 13. Thus, the secondary failures such as overheating and burnout of the load circuit and the excessive battery (20) discharging are prevented. Instead of changing the flashing period to warn of the short-circuit, an alarm such as a lamp may be activated by the timer circuit including the capacitor 910.

When the switch 12 is opened, on the other hand, the transistors 701, 702 and 703 of the operation detection circuit 7 are switched OFF and the transistor 904 is switched ON so that the electric charge remaining on the capacitor 910 is immediately discharged. As a result, when the switch 12 is closed to the other side, stable flashing is ensured.

Assuming that the flashing frequency is 80 per minute, the time interval $T_1$ of the flashing signal shown in (A) of Fig. 4 is approximately 300—400 milliseconds, the ON response delay $T_2$ of the relay switch 10b shown in (B) of Fig. 4 is approximately 1 millisecond, and the OFF response delay $T_3$ of the same is approximately 5—10 milliseconds. Although dependent on the temperature of the lamp filament, the surge in load current shown in (D) of Fig. 4 is approximately 8—30 amperes, while the load current is approximately 4—5 amperes.

In Fig. 4 (C) shows the voltage across the relay coil 10a, (E) shows the state of the transistor 903, and (F) shows the state of the transistor 905.

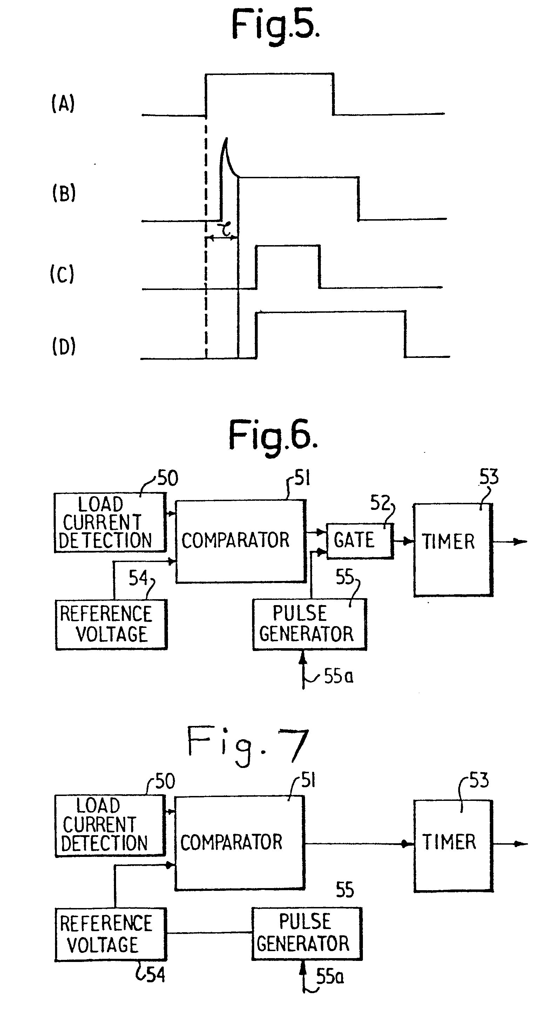

The OFF response delay $T_3$ of the relay switch 10b shown in (E) of Fig. 4 is used to detect the short-circuit in the load circuit so that the short-circuit is not detected in response to the surge current (which is 2—10 times larger than the load current) appearing at the ON time of the relay coil 10a. Instead, the short-circuit may be detected in response to the load current during an interval other than the interval $T_4$, in which the surge current appears. For example, as shown in Fig. 5, the magnitude of the load current may be monitored during the interval of a pulse signal (see (C) or (D) of Fig. 5) which is produced after a predetermined interval r in which the surge current (see (B) of Fig. 5) appeared after the rise of the flashing signal (see (A) of Fig. 5) disappears.

For this modification, the short-circuit discrimination circuit may have a load current detection circuit 50, a comparator 51, a gate 52, a timer circuit 53, a reference voltage circuit 54 and a pulse generator 55 as shown in Fig. 6. The pulse generator 55 generates the pulse signal shown in (C) or (D) of Fig. 5 after the interval r in response to the flashing signal 55a shown in (A) of Fig. 5 so that the gate 52 is opened to pass the short-circuit discrimination signal, produced by the comparator 51, to the timer circuit 53 which prevents the flashing of the lamps 13. It is also possible to apply the output of the pulse generator 55 to the reference voltage circuit 54 as shown in Fig. 7 so that the reference voltage is available only to detect the short-circuit during the interval of the pulse signal. During the other interval, the reference voltage is not available to prevent detection of a short-circuit.

## Claims

1. Direction indicating apparatus for a vehicle comprising two lamp groups one of which is connectable to a battery (20) through switch means (10) by the closure of a direction indicating switch (12) connected in series with the battery and the switch means, signal generating means (4) responsive to the direction indicating switch and effective to generate a train of flashing signals periodically during the closure of the direction indicating switch to the said one of the said two lamp groups; and actuating means (3) responsive to the flashing signals and effective to render the switch means conductive and non-conductive periodically in response to the flashing signals; characterised by current detecting means (11) connected in series with the switch means (10) and effective to produce there-across a current detection signal proportional to the magnitude of the electric current; discriminating means (8) responsive to the current detection signal and a reference signal having a predetermined magnitude and effective to produce a discrimination signal indicating that the current detection signal is in excess of the reference signal; and preventing means (9) responsive to the flashing signals and the discrimination signal and effective to prevent the actuating means (3) from actuating said switch means in response to said flashing signals during an interval of time longer than the period of each of the flashing signals when the discrimination signal is produced after a certain interval of time has passed following the onset of each flashing signal.

2. Apparatus according to claim 1, wherein the switch means (10) comprises:

a relay coil (10a) connected to be energized by the actuating means (3) in response to the flashing signals; and

a relay contact (10b) connected in series with the battery (20) and the direction indicating switch (12) to be rendered conductive upon energization of the relay coil, and wherein the discriminating means (18) comprises:

comparator means operable to compare the current detection signal with the reference signal to thereby produce the discrimination signal; and

means responsive to the flashing signals and effective to prevent production of the discrimination signal during the interval of each of the flashing signals.

3. Apparatus according to claim 2, wherein the preventing means (9) comprises a timer (910, 906, 907, 901 and 902) responsive to the discrimination signal and effective to produce a timer signal having said certain interval of time, the timer signal being applied to the actuating means (3) to thereby inhibit the actuating means.

## Revendications

1. Dispositif indicateur de direction pour véhicule comprenant deux groupes de lampes, dont l'un peut être connecté à une batterie (20) par l'intermédiaire d'un moyen de commutateur (10) par la fermeture d'un commutateur d'indication de direction (12) connecté en série avec la batterie et le moyen de commutateur, un moyen générateur de signaux (4) répondant au commutateur d'indicatation de direction et capable de produire périodiquement un train de signaux de clignotement pendant la fermeture du commutateur d'indication de direction vers ledit groupe de lampes; et un moyen d'actionnement (3) répondant aux signaux de clignotement et capable de rendre le moyen de commutateur conducteur et non conducteur périodiquement ren réponse aux signaux de clignotement; caractérisé en ce qu'il comporte un moyen de détection de courant (11) connecté en série avec le moyen de commutateur (10) et capable de produire un signal de détection de courant proportionnel à l'intensité du courant électrique; un moyen de discrimination (8) répondant au signal de détection de courant et un signal de référence ayant une amplitude prédéterminée et capable de produire un signal de discrimination indiquant que le signal de détection de courant dépasse le signal de référence; et un moyen de prévention (9) répondant aux signaux de clignotement et au signal de discrimination et capable d'éviter que le moyen d'actionnement (3) n'actionne le moyen de commutateur en réponse aux signaux de clignotement pendant un laps de temps supérieur à la durée de chacun des signaux de clignotement lorsque le signal de discrimination est produit après l'écoulement d'un certain laps de temps suivant le début de chaque signal de clignotement.

2. Dispositif selon la revendication 1, caractérisé en ce que le moyen de commutateur (10) comprend:

— une bobine de relais (10a) connectée de manière à être excitée par le moyen d'actionnement (3) en réponse aux signaux de clignotement; et

— des contacts de relais (10b) connectés en série avec la batterie (20) et le commutateur d'indication de direction (12) de manière à être rendus conducteurs lors de l'excitation de la bobine de relais, et où le moyen de discrimination (18) comprend:

— un moyen de comparateur pouvant être actionné de façon à comparer le signal de détection de courant au signal de référence pour produire le signal de discrimination; et

— un moyen répondant aux signaux de clignotement et capable d'éviter la production du signal de discrimination pendant la durée de chacun des signaux de clignotement.

3. Dispositif selon la revendication 2, caractérisé en ce que le moyen de prévention (9) comprend un circuit de minuterie (910, 906, 907, 901 et 902) répondant au signal de discrimination et capable de produire un signal temporel ayant une certaine durée, ce signal étant appliqué au moyen d'actionnement (3) pour inhiber le moyen d'actionnement.

**Patentansprüche**

1. Richtungsanzeigevorrichtung für ein Fahrzeug mit zwei Lampengruppen, von denen eine über eine Schalteinrichtung (10) mit einer Batterie (20) durch das Schließen eines Richtungsanzeigeschalters (12) verbindbar ist, der in Reihe mit der Batterie und der Schalteinrichtung geschaltet ist, einer ein Signal erzeugenden Einrichtung (4), die auf den Richtungsanzeigeschalter anspricht und bewirkt, daß eine Kette von Blinksignalen periodisch erzeugt wird, während der Richtungsanzeigeschalter zu einer der beiden Lampengruppen geschlossen ist, und einer Betätigungseinrichtung (3), die auf die Blinksignale anspricht und bewirkt, daß die Schalteinrichtung periodisch auf die Blinksignale ansprechend leitend und nichtleitend wird, gekennzeichnet durch eine den Strom erfassende Einrichtung (11), die in Reihe mit der Schalteinrichtung (10) geschaltet ist und bewirkt, daß darüber ein Stromerfassungssignal erzeugt wird, das proportional zur Höhe des elektrischen Stromes ist, eine Unterscheidungseinrichtung (8), die auf das Stromerfassungssignal und ein Bezugssignal mit einer bestimmten Grösse anspricht und bewirkt, daß ein Unterscheidungssignal erzeugt wird, das anzeigt, daß das Stromerfassungssignal größer als das Bezugssignal ist, und eine Verhinderungseinrichtung (9), die auf die Blinksignale und das Unterscheidungssignal anspricht und bewirkt, daß die Betätigungseinrichtung (3) an einer Betätigung der Schalteinrichtung auf die Blinksignale ansprechend während eines Zeitintervalls gehindert wird, das länger als die Periode jedes Blinksignals ist, wenn das Unterscheidungssignal nach Ablauf eines gegebenen Zeitintervalls anschließend an den Beginn jedes Blinksignals erzeugt wird.

2. Vorrichtung nach Anspruch 1, dadurch gekennzeichnet, daß die Schalteinrichtung (10) eine Relaisspule (10a), die so geschaltet ist, daß sie über die Betätigungseinrichtung (3) auf die Blinksignale ansprechend erregt wird, und eine Relaiskontakt (10b) umfaßt, der in Reihe mit der Batterie (20) und dem Richtungsanzeigeschalter (12) geschaltet ist, so daß er beim Erregen der Relaisspule leitend wird, und daß die Unterscheidungseinrichtung (18) eine Vergleichseinrichtung, die so arbeitet, daß sie das Stromerfassungssignal mit dem Bezugssignal vergleicht, um dadurch das Unterscheidungssignal zu erzeugen, und eine Einrichtung umfaßt, die auf die Blinksignale anspricht und bewirkt, daß die Erzeugung des Unterscheidungssignals während des Intervalls jedes der Blinksignale verhindert wird.

3. Vorrichtung nach Anspruch 2, dadurch gekennzeichnet, daß die Verhinderungseinrichtung (9) einen Zeitgeber (910, 906, 907, 901 und 902) umfaßt, der auf das Unterscheidungssignal anspricht und bewirkt, daß ein Zeitgebersignal mit einem gegebenen Zeitintervall erzeugt wird, wobei das Zeitgebersignal an der Betätigungseinrichtung (3) liegt, um dadurch die Betätigungseinrichtung zu sperren.

Fig.1.

Fig.2.

# Fig.3.

# Fig.4.

(A) T1 ON OFF ON

(B) T2 T3 ON OFF ON

(C) V

(D) i T2 T3 T4

(E) ON OFF ON

(F) OFF T5 ON OFF ON

0014537

# Fig.5.

(A)

(B)

(C)

(D)

# Fig.6.

| LOAD CURRENT DETECTION (50) | COMPARATOR (51) | GATE (52) | TIMER (53) |

REFERENCE VOLTAGE (54)

PULSE GENERATOR (55)

55a

# Fig.7

| LOAD CURRENT DETECTION (50) | COMPARATOR (51) | | TIMER (53) |

REFERENCE VOLTAGE (54)

PULSE GENERATOR (55)

55a

5